# EUROPEAN PATENT APPLICATION

(11) **EP 4 821 366 A1**
(43) Date of publication of application: **14.10.2026**
(21) Application number: 24900707.1
(22) Date of filing: 06.12.2024
(51) Int. Cl.: A23L 33/145

(54) **COMPOSITION FOR IMPROVING QUALITY OF SLEEP**

(30) Priority: 08.12.2023 JP 2023207565
(71) Applicant: Asahi Group Holdings, Ltd., Tokyo 130-8602 (JP)
(72) Inventor: TANIHIRO, Reiko, Moriya-shi, Ibaraki 302-0106 (JP); SASAI, Masaki, Moriya-shi, Ibaraki 302-0106 (JP); YUKI, Masahiro, Moriya-shi, Ibaraki 302-0106 (JP); HIROTA, Tatsuhiko, Moriya-shi, Ibaraki 302-0106 (JP); NISHIHIRA, Jun, Ebetsu-shi, Hokkaido 069-8585 (JP); HONMA, Naoyuki, Ebetsu-shi, Hokkaido 069-8585 (JP); HASEDA, Akane, Ebetsu-shi, Hokkaido 069-8585 (JP); KATSUYAMA, Hiroyo, Ebetsu-shi, Hokkaido 069-8585 (JP)
(74) Representative: Hoffmann Eitle
(86) International application number: PCT/JP2024/043227
(87) International publication number: WO 2025/121415

(57) **Abstract**

The purpose of the present invention is to provide a new means that is for improving the quality of sleep and that can be used on a daily basis. The present invention pertains to a composition that is for improving the quality of sleep, and that contains yeast mannan.

## Description

### Technical Field

The present invention relates to a composition for improving sleep quality, and particularly relates to a composition for improving sleep quality that is available on a daily basis.

### Background Art

Sleep plays a major role in the recovery of the brain and body and is considered important for leading a healthy life; however, in modern society, due to disturbance of living habits, shifting of lifestyle to night-type, and the like, poor conditions in sleep are brought about, and the number of people suffering from a decline in Quality of Life (QOL) is increasing. Moreover, there are many people suffering from a QOL decline due to poor sleep condition accompanying aging. Therefore, a material that improves sleep quality and attempts improvement of QOL is demanded. For example, Patent Literature 1 describes an agent for improving sleep quality containing bacterial cells of Lactobacillus casei and/or a processed product thereof as an active ingredient. However, one having a sufficient improvement effect has not yet been developed.

On the other hand, mannan purified from the cell wall of yeast is known as "yeast mannan," and application research on it as a functional material having various action effects is proceeding. For example, Patent Literature 2 describes an agent containing yeast mannan for reducing the FB ratio ([occupancy rate of bacteria belonging to the phylum Firmicutes / occupancy rate of bacteria belonging to the phylum Bacteroidetes]) in the intestine; Patent Literature 3 describes a mucin production promoter and a fucosylation promoter containing yeast mannan; and Patent Literature 4 describes an equol production promoter, a premenstrual syndrome improving agent, and a skin condition improving agent containing yeast mannan. However, regarding the influence of yeast mannan on sleep, it is not described in any literature.

### Citation List

### Patent Literatures

Patent Literature 1: International Publication No. WO 2015/146844
Patent Literature 2: International Publication No. WO 2019/142844
Patent Literature 3: International Publication No. WO 2019/142846
Patent Literature 4: International Publication No. WO 2020/004568

### Summary of Invention

An object of the present invention is to provide a new means for improving sleep quality that is available on a daily basis.

As a result of intensive studies to solve the above problems, the present inventors have found that sleep quality is improved by ingestion of yeast mannan, and have completed the present invention. That is, the present invention provides a composition and the like shown below.
[1] A composition for improving sleep quality, comprising yeast mannan.
[2] The composition according to [1], for improving at least one selected from the group consisting of depth of sleep, sleep onset latency, sleepiness, sleep time, sleep efficiency, and nighttime awakenings.
[3] The composition according to [1] or [2], wherein a content of the yeast mannan is 0.05% by mass or more and 90% by mass or less with respect to a total mass of the composition in terms of α-mannan.
[4] The composition according to any one of [1] to [3], wherein an intake amount per day of the yeast mannan is 0.1 g or more and 10.0 g or less in terms of α-mannan.
[5] The composition according to any one of [1] to [4], which is in a form of a food or drink.
[6] A method for improving sleep quality, comprising a step of administering the composition according to any one of [1] to [5] to a subject.
[7] Use of yeast mannan for production of the composition according to any one of [1] to [5].
[8] An agent for improving sleep quality, comprising yeast mannan.
[9] Non-therapeutic use of yeast mannan as an agent for improving sleep quality.

According to the present invention, sleep quality can be improved by ingestion of yeast mannan. Since yeast mannan is also utilized as a food material and is ingestible on a daily basis, it becomes possible to improve usual sleep quality and improve QOL.

### Brief Description of Drawings

Fig. 1A shows the effect of yeast mannan on PSQI global score (mean value ± standard error).
Fig. 1B shows the effect of yeast mannan on the amount of change in PSQI global score (mean value ± standard error).
Fig. 2 shows the effect of yeast mannan on daytime difficulty in maintaining wakefulness score (mean value ± standard error).

### Description of Embodiments

Hereinafter, the present invention will be described in further detail.

The present invention relates to a composition for improving sleep quality. When sleep quality declines due to aging, stress, or daily living habits and the like, sleep disorders come to appear. Insomnia, which is one of sleep disorders, is diagnosed when there is a complaint of insomnia symptoms and one or more daytime functional impairments are observed. Examples of the insomnia symptoms include difficulty in falling asleep, middle awakening, early morning awakening, and lack of feeling of sound sleep. Examples of the daytime functional impairment include feeling of fatigue, feeling of discomfort, decline in attention, concentration, or memory, daytime sleepiness, social or occupational functional decline, academic decline, mood disorder, feeling of irritation, attenuation of motivation, activity, or proactiveness, mistakes at work, susceptibility to accidents while driving, tension due to lack of sleep, headache or gastrointestinal symptoms, or worry or trouble regarding sleep, and the like.

According to the American Academy of Sleep Medicine, sleep stages are divided into three stages of wakefulness (W), REM sleep (R), and non-REM sleep in order from shallower sleep. Non-REM sleep is further divided into three stages of N1 to N3 depending on the depth of sleep. N3, which is the deepest, is also called "deep sleep" or "slow wave sleep," is considered to be related to a feeling of sound sleep (depth of sleep), and is considered important for mental and physical health. Moreover, it is known that secretion of growth hormone becomes active in N3. Growth hormone is a hormone important for repair of cells, skin, and the like, stress relief, suppression of aging, growth of children's bodies, and the like. Secretion of growth hormone has a close relationship with deep sleep appearing during the first sleep cycle, and is secreted in a large amount in a time frame of deep sleep for 3 hours after falling asleep. On the other hand, a time from a state of falling asleep to the first REM sleep is also called "REM sleep latency," and it is known that the REM sleep latency is shortened by aging, stress, and shifting of life to night-type (staying up late at night usually). Shortening of the REM sleep latency means shortening of the time of the above-mentioned first non-REM sleep (total of N1 to N3), and since repair of cranial nerve cells considered to be performed during that time is not sufficiently performed, it can also be said to be a sleep structure in which it is difficult to exhibit original functions of sleep.

The "sleep quality" described in the present specification refers to a state of sleep considering, for example, depth of sleep, sleep onset latency, sleepiness, sleep time, sleep efficiency, sleep rhythm, feeling of fatigue, stress, dreaming, and/or nighttime awakenings comprehensively. In a certain aspect, the composition for improving sleep quality of the present invention may be for improving at least one selected from the group consisting of depth of sleep, sleep onset latency, sleepiness, sleep time, sleep efficiency, and nighttime awakenings. As a method for evaluating the sleep quality, a method usually performed in the art can be adopted without particular limitation; however, for example, the sleep quality may be evaluated by an objective method such as electroencephalogram measurement, and/or a subjective method such as Pittsburgh Sleep Quality Index (PSQI) or OSA sleep inventory MA Version.

Specific evaluation means of the sleep quality are exemplified below, but are not limited to these. The depth of sleep may be evaluated by measuring, for example, deep sleep time, deep sleep appearance rate, REM sleep latency, or various parameters of delta power during non-REM sleep, or the like. Falling asleep may be evaluated by measuring, for example, deep sleep latency or sleep onset latency or sleep latency and the like, or investigating the second factor of the OSA sleep inventory MA version or sleep onset time score of PSQI and the like. Sleepiness may be evaluated by investigating, for example, the first factor of the OSA sleep inventory MA version or daytime sleepiness score of PSQI and the like. Sleep time may be evaluated by measuring, for example, time in bed (TIB), total sleep time (TST), or sleep period time (SPT) and the like, or investigating the fifth factor of the OSA sleep inventory MA version or sleep time score of PSQI and the like. Sleep efficiency may be evaluated by calculating, for example, TST/TIB or TST/SPT and the like, or investigating sleep efficiency score of PSQI and the like. Sleep rhythm may be evaluated by measuring, for example, sleep cycle and the like. Feeling of fatigue may be evaluated by investigating, for example, the fourth factor of the OSA sleep inventory MA version, Brief Job Stress Questionnaire, or feeling of fatigue Visual Analogue Scale (VAS) and the like. Dreaming may be evaluated by investigating, for example, the third factor of the OSA sleep inventory MA version and the like. Awakening during sleep includes, for example, middle awakening or early morning awakening. Middle awakening may be evaluated by measuring, for example, middle awakening/arousal response in sleep period time (SPT), specifically, arousal index (total number of arousals per hour, number of epochs), arousal response time/epoch (arousal response time per epoch), sum of continuous arousal times (total time of times when arousal continued for 3 minutes (6 epochs) or more), or total arousal time and the like. Early morning awakening may be evaluated by measuring, for example, awakening/arousal response in 2 hours before rising, specifically, arousal index (total number of arousals per hour, number of epochs), arousal response time/epoch (arousal response time per epoch), sum of continuous arousal times (total time of times when arousal continued for 3 minutes (6 epochs) or more), or total arousal time and the like.

The composition of the present invention contains yeast mannan as an active ingredient. The "yeast mannan" described in the present specification refers to a substance containing at least one of "α-mannan" derived from yeast and "α-mannan-protein complex" derived from yeast. Both α-mannan and α-mannan-protein complex are major components constituting the cell wall of yeast.

The above-mentioned "α-mannan" is a polysaccharide in which D-mannose is polymerized by α1,6-linkage, α1,2-linkage, or α1,3-linkage, and in a main chain constituted by the α1,6-linkage, one or two or more mannopyranoses may be bonded as a side chain by α1,2-linkage or α1,3-linkage.

The above-mentioned "α-mannan-protein complex" is a water-soluble glycoprotein in which one or two or more α-mannan chains are bonded to a protein localized in a cell wall of yeast by N-glycosidic linkage or O-glycosidic linkage. The "α-mannan chain" bonded in this glycoprotein is a polysaccharide chain in which D-mannose is polymerized by α1,6-linkage, α1,2-linkage, or α1,3-linkage similarly to the above "α-mannan," and in a main chain constituted by the α1,6-linkage, one or two or more mannopyranoses may be bonded as a side chain by α1,2-linkage or α1,3-linkage. Note that the protein of the "α-mannan-protein complex" includes a peptide having 2 or more amino acid residues. That is, the "a-mannan-protein complex" may include an "α-mannan-peptide complex."

The yeast mannan may be one recovered in any manner as long as it is derived from yeast. For example, it may be yeast mannan separated and recovered (extracted) by damaging the cell wall of yeast by an enzyme or chemical treatment or the like, or may be yeast mannan recovered from one released from yeast into a medium. The yeast mannan can also be easily obtained as a commercially available product. Specifically, "Mannan from Saccharomyces cerevisiae M7504" (Sigma-Aldrich Japan G.K.) and the like can be cited.

As a method for preparing the cell wall of yeast, a means usually used in the art may be adopted without particular limitation; however, for example, a yeast extract may be extracted from yeast used for production of beer, sake, or bread and the like, and the cell wall of yeast may be obtained as a residue thereof. Moreover, as the cell wall of yeast, for example, one sold by Asahi Group Foods, Ltd. under the trade name of "Yeast Cell Wall," or other similar products may be used.

As a method for preparing yeast mannan from the cell wall of yeast, a means usually used in the art may be adopted without particular limitation; however, for example, yeast mannan may be prepared by a method including a step of obtaining a crude yeast mannan extract from the cell wall of yeast (hereinafter referred to as "crude extraction step"), and optionally further including a step of purifying the crude yeast mannan extract after the step to obtain a purified yeast mannan product (hereinafter referred to as "purification step"). Optionally, a step of preparing the cell wall thereof from yeast may be included before the crude extraction step, but in the case of using a pre-manufactured cell wall of yeast as a raw material, such a step becomes unnecessary. In the crude extraction step, for example, a method such as a hot water (including dilute alkali) extraction method (see, for example, Japanese Examined Patent Publication No. Sho 64-3479 and Japanese Unexamined Patent Application Publication No. Sho 58-109423), a self-digestion method (see, for example, Japanese Examined Patent Publication No. Sho 58-57153), or an enzymatic digestion method using a cell wall lytic enzyme (see, for example, Japanese Examined Patent Publication No. Sho 59-40126) may be used. In the purification step, for example, a protein removal treatment with hydrochloric acid or the like, an alcohol precipitation treatment, a protease treatment, and a treatment by chromatography and the like can be performed.

In the present specification, the crude yeast mannan extract and the purified yeast mannan product are collectively referred to as "yeast mannan preparation." Commercially available yeast mannan as described above also falls under the yeast mannan preparation. In the yeast mannan preparation, besides α-mannan derived from yeast and/or α-mannan-protein complex derived from yeast, various contaminants (for example, glucan, protein, and mannose and the like) which exist in the cell wall of yeast or are generated by the treatment for preparation of yeast mannan may also be contained.

The yeast from which the yeast mannan is derived is not particularly limited as long as it has the above-mentioned α-mannan and the above-mentioned α-mannan-protein complex as constituents of the cell wall; however, for example, it may be yeast such as Saccharomyces genus bacteria, Schizosaccharomyces genus bacteria, Pichia genus bacteria, Candida genus bacteria, Kluyveromyces genus bacteria, Williopsis genus bacteria, Debaryomyces genus bacteria, Galactomyces genus bacteria, Torulaspora genus bacteria, Rhodotorula genus bacteria, Yarrowia genus bacteria, or Zygosaccharomyces genus bacteria, and Saccharomyces genus bacteria are preferable. Moreover, the yeast from which the yeast mannan is derived may be yeast subjected to a treatment of incorporating a mineral such as zinc, or may be yeast not subjected to such a treatment. A person skilled in the art can culture yeast causing no trouble in use as a raw material for preparing yeast mannan exhibiting the action effects of the present invention according to general methods and conditions. In other words, yeast cultured by a person skilled in the art according to general methods and conditions can be used as a raw material causing no trouble in preparing yeast mannan exhibiting the action effects of the present invention.

In a certain aspect, the yeast from which the yeast mannan is derived may be edible yeast, and is preferably yeast used as baker's yeast or brewer's yeast. Specifically, the yeast from which the yeast mannan is derived may be one or more selected from the group consisting of, for example, Saccharomyces cerevisiae, Schizosaccharomyces pombe, Saccharomyces pastorianus, Saccharomyces paradoxus, Saccharomyces mikatae, Saccharomyces bayanus, Saccharomyces kudriavzevii, Kluyveromyces lactis, Candida utilis, Candida albicans, Candida tropicalis, Candida lypolitica, and Candida sake and the like, and preferably Saccharomyces cerevisiae, Saccharomyces pastorianus, and/or Saccharomyces bayanus and the like.

The content of the yeast mannan in the yeast mannan preparation is not particularly limited, and can be adjusted by appropriately selecting a method adopted in the crude extraction step, adoption or non-adoption of the purification step, and a treatment method thereof in the case of performing the purification step. A person skilled in the art can prepare a yeast mannan preparation containing yeast mannan of a content causing no trouble in exhibiting the action effects of the present invention according to general methods and conditions. In other words, the yeast mannan preparation prepared by a person skilled in the art according to general methods and conditions contains yeast mannan of a content causing no trouble in exhibiting the action effects of the present invention.

The content (ratio) of the yeast mannan in the composition of the present invention or in the yeast mannan preparation can be calculated as a total amount (amount in terms of α-mannan) of α-mannan and an α-mannan chain portion of the α-mannan-protein complex by the following method. For example, when obtaining the content (ratio) of the yeast mannan in the yeast mannan preparation, first, mannose in a specimen (A) of the yeast mannan preparation and mannose in a specimen (B) obtained by hydrolyzing the yeast mannan preparation are each quantified. Here, the specimen (B) is one obtained by treating the specimen (A) with sulfuric acid to hydrolyze all sugar chains in the specimen (A) into monosaccharides, and then neutralizing by a conventional method. Mannose in each specimen can be quantified by, for example, high performance liquid chromatography (HPLC), and may be quantified by a method implemented at Japan Food Research Laboratories. Subsequently, by multiplying a value obtained by subtracting the mannose amount of the specimen (A) from the mannose amount of the specimen (B) by 0.9 in order to reduce an amount of water bonded by hydrolysis of α-mannan and the α-mannan chain portion, the content of the yeast mannan in the yeast mannan preparation can be calculated in terms of α-mannan. Finally, by calculating a ratio of the content of the yeast mannan to the mass of the specimen (A), the ratio of the yeast mannan in the yeast mannan preparation, that is, the content rate of the yeast mannan can be calculated in terms of α-mannan.

The content of the yeast mannan in the composition of the present invention is not particularly limited and can be appropriately set in consideration of an intake amount per meal or per day; however, for example, it may be about 0.05% by mass or more and about 90% by mass or less with respect to the total mass of the composition in terms of α-mannan, and is preferably about 0.05% by mass or more and about 80% by mass or less. Moreover, the intake amount per day of the yeast mannan is not particularly limited; however, for example, it may be about 0.1 g or more and about 10.0 g or less in terms of α-mannan, and is preferably about 0.1 g or more and about 6.5 g or less.

In a certain aspect, the composition of the present invention may be in a form of a food or drink or a medicament, and can be appropriately prepared into a dosage form known as a food or drink or a medicament. The dosage form is not particularly limited; however, for example, it may be a tablet, a capsule, a powder, a granule, a liquid, or a supplement (dietary supplement) of other dosage forms and the like, or may be a soft drink (carbonated drink, non-alcoholic drink, juice, coffee drink, tea-based drink, mineral water, and sports drink and the like), a milk drink, a soy milk drink, fermented milk, a lactic acid bacteria drink, cocoa, an alcoholic drink (beer, low-malt beer, other brewed liquor, liqueur, sake, amazake, wine, and shochu and the like), a drink prepared from instant powder, or other drinks and the like, and may be bread, cereal, confectionery (biscuit, cookie, and chocolate and the like), a processed product (dried bonito, salted fish guts, and kusaya and the like), pickles (nuka-zuke, kimchi, and pickles and the like), fermented food (natto, cheese, and yogurt and the like), a seasoning (soy sauce, miso, and vinegar and the like), a food additive (food emulsifier and emulsifying stabilizer for food and the like), or other foods and the like.

Since the composition of the present invention is used for improving sleep quality, for example, the following indications may be attached to the composition.
· For those who are not satisfied with sleep quality
· For those who are not satisfied with quality of slumber
· Useful for improvement of sleep quality (depth of sleep)
· Improve sleep quality by increasing ratio of deep sleep and REM sleep
· Useful for improvement of sleep quality (sleep onset latency)
· Useful for improvement of sleep quality (refreshing awakening)
· Support refreshing awakening
· Useful for improvement of sleep quality (depth of sleep at the beginning of sleep) and refreshing awakening

A subject to which the composition of the present invention is applied is not particularly limited, and may be a human or another mammal (pet such as dog and cat, and livestock such as pig and cow, and the like).

The composition of the present invention may further contain arbitrary inert ingredients usually used in the art, for example, additives such as pharmaceutically or dietetically acceptable excipients, solvents, buffers, sweeteners, acidulants, flavors, and antioxidants, as long as the object of the present invention is not impaired. Moreover, the composition may further contain additional active ingredients usually used in the art as long as the object of the present invention is not impaired, and the additional active ingredient may be an ingredient having a sleep improving action or may be an ingredient having other actions.

The composition of the present invention in the case of taking the form of a food or drink can further contain at least one selected from various ingredients contained in general or known foods or drinks, for example, water (or carbonated water), coffee extract, tea leaf extract, fruit juice, other plant raw material extracts, milk, soy milk, fermented milk, oils and fats, carbohydrates, sweeteners, acidulants, coloring agents, and flavors, in addition to each agent of the present invention. The content of each agent of the present invention in the composition of the present invention is not particularly limited, and can be appropriately set while considering turbidity and the like as necessary, similarly to general compositions for eating and drinking.

In another aspect, the present invention also relates to a method for improving sleep quality, comprising a step of administering an effective amount of yeast mannan to a subject, and the yeast mannan may be administered in the aspect of the composition for improving sleep quality described as one aspect of the present invention. In a certain aspect, the present invention also relates to a method for improving sleep quality, comprising a step in which a subject ingests an effective amount of yeast mannan, or a step of allowing a subject to ingest it. In other words, the present invention also relates to a method for improving sleep quality, comprising a step of introducing an effective amount of yeast mannan into the intestine of a subject. Specific aspects of the yeast mannan used in the method of the present invention and specific aspects of the sleep quality improved by the method of the present invention are as described above in relation to the composition of the present invention.

In still another aspect, the present invention also relates to use of yeast mannan for production of the composition for improving sleep quality described as one aspect of the present invention. Specific aspects of the yeast mannan used in the method of use of the present invention and specific aspects of the sleep quality improved by the composition defined by the present invention are as described above in relation to the composition of the present invention.

In still another aspect, the present invention also relates to an agent for improving sleep quality containing yeast mannan as an active ingredient, or non-therapeutic use of yeast mannan as an agent for improving sleep quality. Specific aspects of the yeast mannan used in the improving agent defined by the present invention and specific aspects of the sleep quality improved by the improving agent defined by the present invention are as described above in relation to the composition of the present invention.

Hereinafter, the present invention will be specifically described by examples, but the scope of the present invention is not limited to these examples.

### Examples

### 1. Preparation of Yeast Mannan Preparation X

### (1) Yeast Mannan Preparation X: Derived from Saccharomyces pastorianus

10 kg of cell wall of commercially available yeast (trade name "Yeast Cell Wall," Asahi Group Foods, Ltd.) was suspended in distilled water, adjusted to pH 11.0 by adding sodium hydroxide, and then boiled at 90°C for 12 hours. The supernatant was recovered by centrifugation, and adjusted to pH 5.5 by adding hydrochloric acid. 2 kg of Yeast Mannan Preparation X was obtained by lyophilization operation.

### (2) Content rate of yeast mannan

Entrusted to Japan Food Research Laboratories, mannose in the specimen (A) of the Yeast Mannan Preparation X obtained above and mannose in the specimen (B) obtained by hydrolyzing the Yeast Mannan Preparation X obtained above were each quantified. As a result, the content of mannose in the specimen (A) was 0.17 g / 100 g of specimen, and the content of mannose in the specimen (B) was 61.3 g / 100 g of specimen. Based on these, when the content rate of yeast mannan in the obtained Yeast Mannan Preparation X was calculated by the above-mentioned calculation method, it was 55% in terms of α-mannan.

Note that the specific procedure of the quantification method of mannose in the specimen (A) and the specimen (B) at Japan Food Research Laboratories is as follows. 0.6 g of each of the specimen (A) and the specimen (B) was collected, added to sulfuric acid having a concentration of 72%, and stirred at room temperature for 1 hour. After diluting the concentration of sulfuric acid in the specimen solution to 4%, it was heated for 1 hour in an autoclave (121°C). After cooling the specimen solution to room temperature, it was neutralized and adjusted to 200 mL with water. The specimen solution after the volume adjustment was filtered with filter paper, the filtrate was diluted 50 times with water, and the diluted solution was further filtered with a membrane filter. This filtrate was analyzed by a high performance liquid chromatography method under the following operation conditions, the concentration of mannose in the filtrate was measured, and mannose in the specimen (A) and the specimen (B) was quantified.
Model: LC-20AD (Shimadzu Corporation)
Detector: Fluorescence spectrophotometer RF-20Axs (Shimadzu Corporation)
Column: TSKgel SUGAR AXI, φ4.6 mm × 150 mm (Tosoh Corporation)
Column temperature: 60°C
Mobile phase: 0.5 mol/L borate buffer (pH 8.7)
Flow rate: 0.4 mL/min
Injection volume: 20 µL
Fluorescence excitation wavelength: 320 nm
Fluorescence measurement wavelength: 430 nm
Post-column:
   Reaction solution: 1 w/v% L-arginine solution
   Reaction solution flow rate: 0.7 mL/min
   Reaction temperature: 150°C

### 2. Test Example 1

As a test food, a tablet containing 90% by mass of Yeast Mannan Preparation X was prepared, and as a control food, a tablet containing maltose instead of Yeast Mannan Preparation X was prepared. A randomized placebo-controlled double-blind parallel-group comparison study was conducted in which 33 healthy men and women ingested either the test food containing Yeast Mannan Preparation X or the control food not containing it for 4 consecutive weeks, and objective sleep state was evaluated by measuring brain waves during sleep using an electroencephalograph before and after the continuous ingestion. Note that Yeast Mannan Preparation X in the test food ingested per day was 1130 mg, and the yeast mannan amount corresponds to 0.62 g in terms of α-mannan.

As a result, the total time in bed from going to bed to rising did not change in ingestion of the control food, but when the test food was ingested, the total time in bed increased, and the amount of change thereof was significantly large compared with the amount of change by ingestion of the control food (Table 1).

**Table 1: Total time in bed (mean value ± standard error)**

| Subject | Before ingestion (A) [min] | After ingestion (B) [min] | Amount of change (B-A) [min] |
|---|---|---|---|
| Control food ingestion group | 374.0±14.6 | 374.8±14.6 | 0.8±8.9 |
| Test food ingestion group | 349.4±21.8 | 409.1±16.4 | 59.7±21.7** |

| | | | |
|---|---|---|---|
| **p<0.01, Mann-Whitney U test (with respect to control food ingestion group) | | | |

N3 (deep sleep) having the deepest depth among non-REM sleep is also called slow wave sleep and is considered to be related to a feeling of sound sleep. Deep sleep time significantly increased in the group having ingested the test food compared with the group having ingested the control food (Table 2). The appearance rate of deep sleep (N3/TST) with respect to total sleep time (TST) also significantly increased in the group having ingested the test food compared with the group having ingested the control food (Table 2).

**Table 2: Deep sleep time and deep sleep appearance rate (mean value ± standard error)**

| Subject | | Before ingestion | After ingestion |
|---|---|---|---|
| Control food ingestion group | | | |
| | Deep sleep time [min] | 44.3±8.9 | 31.5±5.8 |
| | Deep sleep appearance rate [%] | 16.1±2.8 | 10.6±2.0 |

| Test food ingestion group | | | |
|---|---|---|---|
| | Deep sleep time [min] | 48.6±9.6 | 57.6±10.9* |
| | Deep sleep appearance rate [%] | 18.3±3.2 | 20.4±3.7* |

| | | | |
|---|---|---|---|
| *p<0.05, Mann-Whitney U test (with respect to control food ingestion group) | | | |

Therefore, it was demonstrated that by ingestion of yeast mannan, the time spent in bed becomes longer, and the time and frequency of sleeping soundly also increase. That is, it was demonstrated that by ingestion of yeast mannan, sleep time becomes longer and the feeling of sound sleep is improved. Note that "total sleep time (TST)" represents a time obtained by excluding middle awakening from the time from falling asleep to the last awakening of the next morning.

The time from the time of falling asleep to the first REM sleep (REM sleep latency) significantly increased in the group having ingested the test food compared with the group having ingested the control food (Table 3).

**Table 3: REM sleep latency (mean value ± standard error)**

| Subject | Before ingestion [min] | After ingestion [min] |
|---|---|---|
| Control food ingestion group | 44.1±9.7 | 29.5±5.7 |
| Test food ingestion group | 50.1±6.4 | 52.3±7.5* |

| | | |
|---|---|---|
| *p<0.05, Mann-Whitney U test (with respect to control food ingestion group) | | |

And, the time from the time of falling asleep to the first deep sleep (deep sleep latency) was significantly shortened in the group having ingested the test food compared with the group having ingested the control food (Table 4), and the amount of change thereof was also significantly different between both groups (Table 4). Therefore, it was demonstrated that by ingestion of yeast mannan, sleep onset latency becomes better and deep sleep comes to continue for a long time.

**Table 4: Deep sleep latency (mean value ± standard error)**

| Subject | Before ingestion (A) [min] | After ingestion (B) [min] | Amount of change (B-A) [min] |
|---|---|---|---|
| Control food ingestion group | 55.1±10.4 | 101.3±28.8 | 46.3±27.0 |
| Test food ingestion group | 71.9±19.6 | 37.0±13.2* | -34.9±13.3** |

| | | | |
|---|---|---|---|
| *p<0.05, Mann-Whitney U test (with respect to control food ingestion group) **p<0.01, Mann-Whitney U test (with respect to control food ingestion group) | | | |

Moreover, for the above 33 healthy men and women, a stress check by the Brief Job Stress Questionnaire 57 items (see "Stress Check System Implementation Manual based on Industrial Safety and Health Act" (Revised February 2021) of Occupational Health Support Office, Occupational Health Division, Industrial Safety and Health Department, Labour Standards Bureau, Ministry of Health, Labour and Welfare) was performed before continuous ingestion of each food, and subjective sleep state was evaluated using the Pittsburgh Sleep Quality Index (PSQI) Japanese version. Feeling of fatigue was determined in 5 stages from the result of the Brief Job Stress Questionnaire 57 items, and the subjects were divided into fatigue feeling non-aware persons determined as "low" or "slightly low" in feeling of fatigue, and fatigue feeling aware persons determined as "normal," "slightly high," or "high." Regarding the PSQI global score (mean value ± standard error) before ingestion of food, there was no large difference between the test groups, but in the fatigue feeling aware persons, the PSQI global score was higher than in the fatigue feeling non-aware persons (Table 5), so the sleep quality of the fatigue feeling aware persons was considered to be poor.

**Table 5: PSQI global score before ingestion of each food**

| Subject | | PSQI global score |
|---|---|---|
| Control food ingestion scheduled group | | |
| | Fatigue feeling non-aware person (8 persons) | 4.13±0.55 |
| | Fatigue feeling aware person (10 persons) | 5.00±0.49 |

| Test food ingestion scheduled group | | |
|---|---|---|
| | Fatigue feeling non-aware person (8 persons) | 4.00±0.38 |
| | Fatigue feeling aware person (7 persons) | 6.14±0.74 |

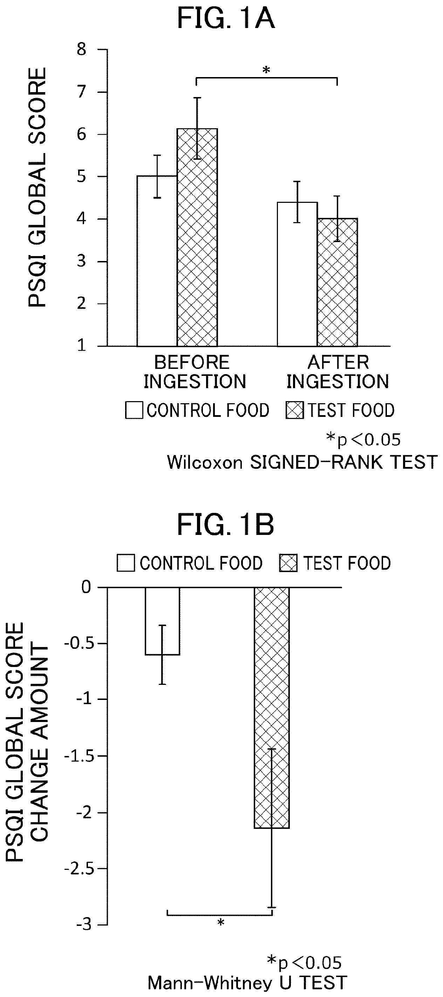

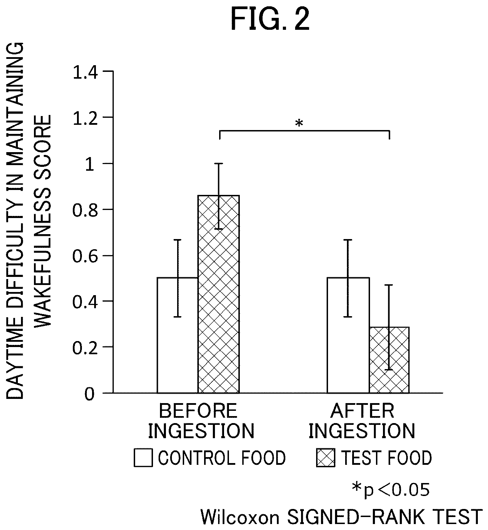

Regarding the fatigue feeling aware persons of each group, the subjective sleep state was evaluated using the PSQI Japanese version also after continuous ingestion of each food. The PSQI global score of the fatigue feeling aware persons had no significant difference before and after ingestion of the control food, but significantly decreased after ingestion of the test food (Fig. 1A), and the amount of change thereof was significantly different between the control food ingestion group and the test food ingestion group (Fig. 1B). Moreover, the daytime difficulty in maintaining wakefulness score in the items of PSQI significantly decreased only in the test food ingestion group (Fig. 2). Therefore, it was demonstrated that by ingestion of yeast mannan, sleep quality is improved and daytime sleepiness is reduced.

### 3. Test Example 2

As a test food, a tablet containing 90% by mass of Yeast Mannan Preparation X was prepared, and as a control food, a tablet containing maltose instead of Yeast Mannan Preparation X was prepared. A randomized placebo-controlled double-blind parallel-group comparison study was conducted in which 100 healthy men and women ingested either the test food containing Yeast Mannan Preparation X or the control food not containing it for 8 consecutive weeks, and objective sleep state was evaluated by measuring brain waves during sleep using an electroencephalograph before and after the continuous ingestion. Sleep efficiency was calculated as TST/TIB (%) by dividing total sleep time (Total Sleep Time; TST) by total time in bed (Time in Bed; TIB). Moreover, subjective sleep state was evaluated using the Pittsburgh Sleep Quality Index (PSQI) Japanese version and OSA sleep inventory MA version before and after continuous ingestion. Note that Yeast Mannan Preparation X in the test food ingested per day was 1130 mg, and the yeast mannan amount corresponds to 0.62 g in terms of α-mannan.

As a result, regarding the PSQI global score, a large difference was not recognized between the test food group and the control food group before ingestion, but the PSQI global score of the test food group after ingestion was significantly lower with respect to the control food group, and the amount of change thereof was also significantly different between both groups (Table 6). Moreover, the amount of change in the sleep time score in the items of PSQI was significantly different between both groups, and a decrease in the score was seen in the test food group (Table 7).

**Table 6**

| PSQI Global Score | | | | | | |
|---|---|---|---|---|---|---|
| | Before ingestion [A] | | After ingestion [B] | | Amount of change [B-A] | |
| | Mean | Standard error | Mean | Standard error | Mean | Standard error |
| Control food ingestion group | 6.76 | 0.28 | 5.52 | 0.32 | -1.24 | 0.32 |
| Test food ingestion group | 6.82 | 0.27 | 4.66 | 0.25* | -2.16 | 0.23* |

| | | | | | | |
|---|---|---|---|---|---|---|
| * p<0.05, Mann-Whitney U test (with respect to control food ingestion group) | | | | | | |

**Table 7**

| PSQI Sleep Time Score | | | | | | |
|---|---|---|---|---|---|---|
| | Before ingestion [A] | | After ingestion [B] | | Amount of change [B-A] | |
| | Mean | Standard error | Mean | Standard error | Mean | Standard error |
| Control food ingestion group | 1.24 | 0.11 | 1.32 | 0.11 | 0.08 | 0.08 |
| Test food ingestion group | 1.42 | 0.10 | 1.24 | 0.10 | -0.18 | 0.08* |

| | | | | | | |
|---|---|---|---|---|---|---|
| * p<0.05, Mann-Whitney U test (with respect to control food ingestion group) | | | | | | |

Since both the PSQI global score and the sleep time score represent a good state when the score is low, it was demonstrated that by yeast mannan ingestion, sleep time becomes good and comprehensive sleep quality is improved.

Regarding the second factor of the OSA sleep inventory MA version (initiation and maintenance of sleep), a large difference was not recognized between the test food group and the control food group before ingestion, but the score of the test food group after ingestion was significantly higher with respect to the control food group, and the amount of change thereof was also significantly different between both groups (Table 8).

**Table 8**

| OSA-MA Factor 2 | | | | | | |
|---|---|---|---|---|---|---|
| | Before ingestion [A] | | After ingestion [B] | | Amount of change [B-A] | |
| | Mean | Standard error | Mean | Standard error | Mean | Standard error |
| Control food ingestion group | 14.16 | 0.50 | 15.10 | 0.60 | 0.94 | 0.61 |
| Test food ingestion group | 13.91 | 0.53 | 16.95 | 0.64* | 3.03 | 0.59* |

| | | | | | | |
|---|---|---|---|---|---|---|
| * p<0.05, t-test (with respect to control food ingestion group) | | | | | | |

Since the second factor of the OSA sleep inventory MA version represents a good state when the score is high, it was demonstrated that by yeast mannan ingestion, initiation and maintenance of sleep are improved.

The amount of change in sleep efficiency calculated as a result of brain wave measurement was significantly different between both groups, and showed a higher value in the test food group than in the control food group after ingestion (Table 9). Moreover, the amount of change in the sum of continuous arousal times (total time of times when arousal continued for 3 minutes (6 epochs) or more) was significantly different between both groups, and showed a lower value in the test food group than in the control food group after ingestion (Table 10).

**Table 9**

| Sleep efficiency (%) | | | | | | |
|---|---|---|---|---|---|---|
| | Before ingestion [A] | | After ingestion [B] | | Amount of change [B-A] | |
| | Mean | Standard error | Mean | Standard error | Mean | Standard error |
| Control food ingestion group | 87.08 | 0.69 | 84.72 | 1.12 | -2.37 | 1.02 |
| Test food ingestion group | 86.54 | 0.93 | 86.76 | 0.76 | 0.23 | 0.77* |

| | | | | | | |
|---|---|---|---|---|---|---|
| * p<0.05, t-test (with respect to control food ingestion group) | | | | | | |

**Table 10**

| Sum of continuous arousal times (min) | | | | | | |
|---|---|---|---|---|---|---|
| | Before ingestion [A] | | After ingestion [B] | | Amount of change [B-A] | |
| | Mean | Standard error | Mean | Standard error | Mean | Standard error |
| Control food ingestion group | 8.57 | 1.12 | 12.99 | 2.00 | 4.43 | 1.91 |
| Test food ingestion group | 10.95 | 2.04 | 9.99 | 1.48 | -0.97 | 1.72* |

| | | | | | | |
|---|---|---|---|---|---|---|
| * p<0.05, t-test (with respect to control food ingestion group) | | | | | | |

Therefore, it was demonstrated that by yeast mannan ingestion, continuous middle awakening time is shortened, and sleep changes to efficient sleep.

From the above, it was found that sleep quality can be improved by ingestion of yeast mannan. Since yeast mannan is also utilized as a food material and is ingestible on a daily basis, it becomes possible to improve usual sleep quality and improve quality of life.

## Claims

1. A composition for improving sleep quality, comprising yeast mannan.

2. The composition according to claim 1, for improving at least one selected from the group consisting of depth of sleep, sleep onset latency, sleepiness, sleep time, sleep efficiency, and nighttime awakenings.

3. The composition according to claim 1, wherein a content of the yeast mannan is 0.05% by mass or more and 90% by mass or less with respect to a total mass of the composition in terms of α-mannan.

4. The composition according to claim 1, wherein an intake amount per day of the yeast mannan is 0.1 g or more and 10.0 g or less in terms of α-mannan.

5. The composition according to any one of claims 1 to 4, which is in a form of a food or drink.
